# EUROPÄISCHE PATENTSCHRIFT

(11) **EP 1 618 703 B1**
(45) Veröffentlichungstag und Bekanntmachung des Hinweises auf die Patenterteilung: **26.05.2010**
(21) Anmeldenummer: 04713549.6
(22) Anmeldetag: 23.03.2004
(51) Int. Cl.: H04L 12/24

(54) **VERFAHREN UND VORRICHTUNG ZUR ERKENNUNG EINER ORDNUNG IN EINEM NETZWERK**
METHOD AND DEVICE FOR IDENTIFYING AN ORDER IN A NETWORK
PROCEDE ET DISPOSITIF PERMETTANT D'IDENTIFIER UN ORDRE DANS UN RESEAU

(30) Priorität: 25.04.2003 DE 10318837
(43) Veröffentlichungstag der Anmeldung: 25.01.2006
(73) Patentinhaber: SIEMENS AKTIENGESELLSCHAFT, 80333 München (DE)
(72) Erfinder: BÜSGEN, Ralph, 30097 Duluth, Georgia (US); LANGE, Ronald, 90766 Fürth (DE); TALANIS, Thomas, 91336 Heroldsbach (DE)
(86) Internationale Anmeldenummer: PCT/EP2004/003071
(87) Internationale Veröffentlichungsnummer: WO 2004/097546

(56) Entgegenhaltungen:
- EP-A- 1 107 108
- EP-A- 1 107 108
- EP-A- 1 424 808
- EP-A- 1 424 808
- WO-A-02/05107
- WO-A-02/05107
- DE-A1- 10 032 866
- DE-C1- 19 508 730
- US-A- 5 574 860
- US-A- 5 574 860

## Beschreibung

Die vorliegende Erfindung betrifft ein Verfahren und eine Vorrichtung zur Erkennung einer Ordnung in einem Netzwerk. Insbesondere betrifft die vorliegende Erfindung ein Verfahren und eine Vorrichtung zur Erkennung einer Ordnung von Teilnehmern in einem Netzwerk. Ferner betrifft die vorliegende Erfindung ein Computerprogrammprodukt zur Ausführung des Verfahrens.

Netzwerke sind in vielen Varianten und Ausführungsformen für die verschiedensten Anwendungen bekannt. Sie werden immer dann eingesetzt, wenn es darum geht, dass viele Teilnehmer in komplexen Anordnungen miteinander zusammenwirken sollen.

Beispielsweise ist es heutzutage üblich, mit einem sogenannten Ethernet mehrere Teilnehmer, wie beispielsweise Computer und Peripheriegeräte wie Drucker, miteinander zu verbinden. Dazu sind an einer Vielzahl von Stellen, zum Beispiel innerhalb eines Gebäudes, sogenannte Knoten vorgesehen. Diese Knoten weisen selbst wieder eine Anzahl von Anschlüssen auf. Die Knoten sind untereinander so verbunden, dass sie ein Grundgerüst für ein Netzwerk bereitstellen. Ein oder mehrere Teilnehmer können nun mittels der freien Anschlüsse der Knoten in das Netzwerk eingebunden werden. Daten oder auch Befehle, die von einem Teilnehmer, wie beispielsweise einem Computer erzeugt werden, können dann wahlweise über das Netzwerk zu einem anderen mit dem Netzwerk verbundenen Computer übertragen werden oder andererseits an einem mit dem Netzwerk verbundenen Drucker ausgegeben werden.

Ein anderes bekanntes Beispiel ist die Zusammenfassung von ein oder mehreren Steuerungen, Datenspeichern, Bedienungseinheiten, Antrieben, Aktoren und Sensoren zu einem Netzwerk innerhalb eines Automatisierungssystems. So können beispielsweise, zentral über eine Bedieneinheit Befehle eingegeben werden, die zuerst über das Netzwerk zu einer Steuerung und dann zu den entsprechenden Aktoren oder anderen Einheiten weitergeleitet werden.

Wesentlich bei all diesen Ausführungen und Anwendungen ist, dass innerhalb des Netzwerkes die Informationen vorhanden sind, welche Teilnehmer tatsächlich im Netzwerk sind. So ist beispielsweise aus der US 5,574,860 ein Netzwerk bekannt, dass mittels einer zentralen Einheit ermittelt, welche Teilnehmer gerade im Netzwerk vorhanden sind. Dazu sendet die zentrale Einheit eine Vielzahl von Anfragen über das Netzwerk. Sobald ein Teilnehmer mit dem Netzwerk verbunden ist, sendet dieser eine Rückmeldung auf die Anfrage zur zentralen Einheit. Anhand der Rückmeldungen ermittelt die zentrale Einheit, welche Teilnehmer gerade mit dem Netzwerk verbunden sind.

Ferner ist in der WO02/05107 ein Industrienetzwerk beschrieben, bei dem eine zentrale Einheit im Falle eines Ausfalls eines Teilnehmers für eine Rekonfiguration sorgt, sobald eine Servicekraft den defekten Teilnehmer ausgetauscht hat.

Aus der europäischen Patentanmeldung EP 1 107 108 A1 - Mayer "System and method for managing the configuration of hierarchically networked data processing devices" ist eine Anordnung bekannt, bei der Datenverarbeitungsgeräte in einem Netzwerk auf verschiedenen Hierarchieebenen angeordnet sind, wobei jedes der Datenverarbeitungsgeräte mit einer eigenen Verwaltungsinstanz ausgerüstet ist. Diese Verwaltungsinstanzen entscheiden selbsttätig über Konfigurationsänderungen sowohl der Datenverarbeitungsgeräte der eigenen Hierarchieebene als auch der Datenverarbeitungsgeräte niedrigerer Hierarchieebenen.

Die Erfindung unterscheidet sich von diesem Stand der Technik in dem Merkmal, dass die Reihenfolge der Anschlüsse eines Knotens als Hierarchie für die Festlegung der Beziehung zwischen Teilnehmern herangezogen wird.

Die in der US 5,574,860 beschriebene Methode hat aber den Nachteil, dass eine, der Menge der im Netzwerk befindlichen Knoten proportionale Anzahl von Anfragen notwendig ist, um festzustellen, welche Teilnehmer mit dem Netzwerk verbunden sind. Dieses Verfahren ist somit sehr komplex und zeitaufwendig. Gerade wenn eine größere Anzahl von Teilnehmern mit dem Netzwerk verbunden ist, wird viel Zeit für die Erkennung und Ordnung der Teilnehmer benötigt. Die in der WO02/05107 beschriebene Methode hat den Nachteil, dass eine Rekonfiguration immer zentral von einer Einheit gesteuert wird.

Aufgabe der vorliegenden Erfindung ist es daher ein Verfahren und eine Vorrichtung anzugeben, die auf einfache Art und Weise eine Ordnung in einem Netzwerk erkennen.

DIE Aufgabe wird gelöst durch das Verfahren nach Anspruch 1.

Ferner wird die Aufgabe gelöst durch die Vorrichtung nach Anspruch 12.

Gerade dadurch, dass für jeden Knoten die Hierachie der Anschlüsse im voraus definiert bzw. bekannt ist, lässt sich für jeden der Knoten eine Hierachie der belegten Anschlüsse ableiten, sobald die belegten Anschlüsse ermittelt wurden. Als belegte Anschlüsse werden im folgenden Anschlüsse eines Knotens bezeichnet, die mit anderen Knoten oder Teilnehmern des Netzwerkes verbunden sind. Damit ist es möglich, mit nur wenigen Schritten und damit sehr schnell für jeden Teilnehmer des Netzwerkes eine Beziehung zu anderen Teilnehmern des Netzwerkes festzustellen. Da die Hierachie der belegten Anschlüsse für jeden Knoten bekannt ist, lässt sich auch auf einfache Art und Weise eine Beziehung zwischen Teilnehmern über mehrere verbundenen Knoten hinweg ermitteln. Entsprechend können Mittel vorgesehen sein, die diese Aufgaben übernehmen und innerhalb kürzester Zeit die Beziehung zwischen Teilnehmern eines Netzwerkes feststellen.

Werden die einzelnen Verfahrenschritte dezentral, dass heißt von jedem Teilnehmer des Netzwerkes ausgeführt, lässt sich mit geringem Zeitaufwand sehr schnell eine Ordnung der Teilnehmer eines Netzwerkes untereinander erkennen. Gerade wenn es beispielsweise zu einem Ausfall eines Teilnehmers kommt, muss nach dessen Austausch nicht das ganze Netzwerk durch einen zentrale Einheit neu konfiguriert werden, sondern die Rekonfiguration kann dezentral in der Umgebung des ausgetauschten Teilnehmers erfolgen.

Insbesondere lässt sich aus der festgelegten Ordnung von Teilnehmern für jeden Teilnehmer seine Vorgänger und seine Nachfolger festlegen. Dies ist beispielsweise dann von Vorteil, wenn die Teilnehmer im Netzwerk Gruppen mit unterschiedlichen Funktionen angehören. So kann sehr schnell für einen Teilnehmer der nächste Teilnehmer aus einer Gruppe mit einer speziellen Funktion festgestellt werden.

Werden die Verfahrenschritte ganz oder teilweise in periodischen Zeitabständen wiederholt, kann jeder Teilnehmer dezentral, dass heißt für sich, Änderungen in seiner Umgebung erfassen und entsprechend reagieren. Sobald eine Änderung festgestellt wird, kann auf diese Änderung dezentral und nicht vom ganzen Netzwerk über eine zentrale Einheit reagiert werden. Dies ist dann von Vorteil, wenn Knoten oder auch Teilnehmer wegfallen oder neu hinzukommen oder ausgefallene Teilnehmer ersetzt werden müssen. Dann muss nicht das gesamte Netzwerk über die zentrale Einheit auf die Änderung reagieren, sondern mit Hilfe der festgelegten und damit bekannten Ordnung der Teilnehmer, dass heißt mit Hilfe der Vorgänger und Nachfolger lässt sich das Netzwerk dezentral wieder aufbauen.

Insbesondere wenn die, entsprechend der vorliegenden Erfindung, festgelegte Beziehung der Teilnehmer zueinander in Teilnehmern oder Knoten in entsprechenden Mitteln gespeichert werden, kann die Rekonstruktion lokal sehr schnell erfolgen, wenn ein Teilnehmer der einen anderen ersetzt, bei seinem Nachbarn, das heißt Vorgänger oder Nachfolger, die gespeicherte Beziehung des alten Teilnehmers abfragt. Diese Mittel können jegliche Art von Speicher wie beispielsweise Festplatten, Disketten oder auch Speicherbausteine wie Flashs sein.

Ein Computerprogrammprodukt zur Ausführung der Verfahrensschritte gemäß der vorliegenden Erfindung erlaubt die schnelle Einbindung neuer Teilnehmer in das Netzwerk.

Anhand der nachfolgenden Figuren und der Beschreibung soll nun das Prinzip der vorliegenden Erfindung näher erläutert werden, wobei:
- Fig.1: eine erste Ausführung in einem Automatisierungssystem zeigt,
- Fig.2: schematisch eine Ordnung der ersten Ausführung zeigt, und
- Fig.3: eine zweite Ausführung für ein Schienenfahrzeug zeigt.

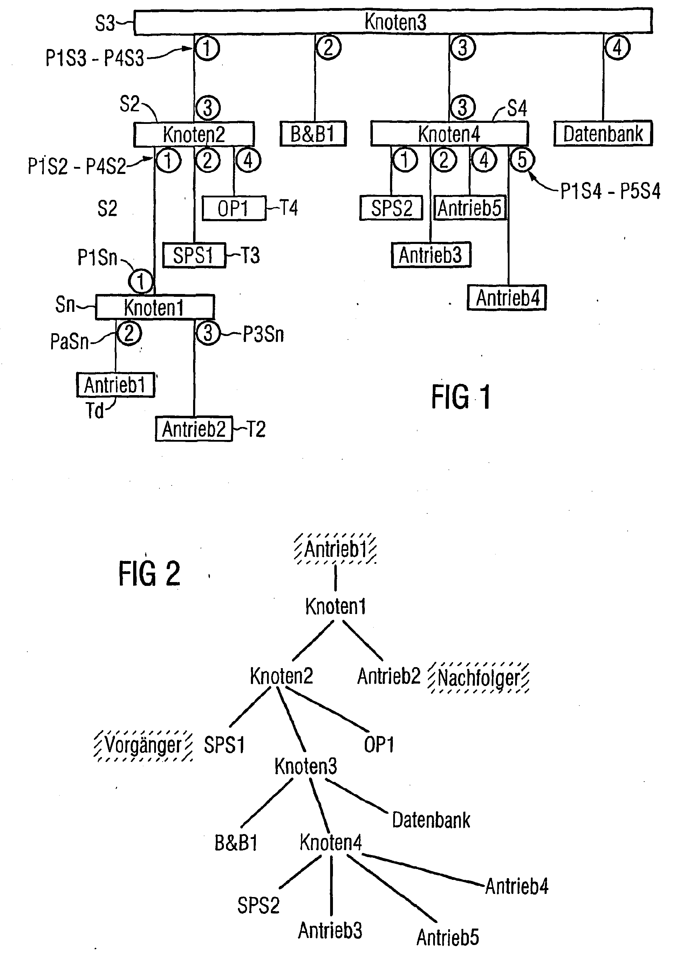

Fig.1 zeigt eine erste Ausführung der vorliegenden Erfindung, wie sie in einem Automatisierungssystem vorgesehen werden kann. Eine Vielzahl von Knoten Sn, S2, S3 und S4 sind miteinander verbunden. Jeder der Knoten weist dabei eine Anzahl von Anschlüssen auf. Beispielsweise weist der Knoten S3 die Anschlüsse P1S3, P2S3, P3S3 und P4S3 auf. Der Knoten S3 ist mittels seines Anschlusses P1S3 mit dem Anschluss P3S2 des Knotens S2 verbunden. Dieser wiederum ist mittels des Anschlusses P1S2 mit dem Anschluss P1Sn des Knotens Sn verbunden. Die anderen Anschlüssen die nicht durch Knoten belegt sind können von anderen Teilnehmern, wie beispielsweise Steuerungen, Datenbanken, Bedienungseinheiten, Antrieben, Sensoren oder Aktoren belegt sein. So ist beispielsweise der Knoten S3 über den Anschluss P2S2 mit einer Bedieneinheit B&B1 verbunden und über den Anschluss P2S3 mit einer Datenbank 1. Ferner ist der Knoten Sn über den Anschluss PaSn mit einem Antrieb 1 als Teilnehmer Td und über Anschluss P3Sn mit einem Antrieb 2 als Teilnehmer T2 verbunden. Neben der schon genannten Belegung ist der Knoten S2 weiterhin über P2S2 mit einer Speicher-Programmierbaren-Steuerung SPS1 als Teilnehmer T3 sowie einer Bedieneinheit OP1 als Teilnehmer T4 verbunden.

Das Prinzip der vorliegenden Erfindung soll nun beispielhaft anhand des Antriebs 1, der als Teilnehmer Td im Netzwerk bezeichnet ist, näher beschrieben werden. Zuerst muss erkannt werden, mit welchem Knoten der Teilnehmer Td verbunden ist. Dies kann beispielsweise mittels eines Discovery Protokolls erfolgen, das gleichzeitig auch die Bestimmung des Anschlusses PaSn des zugeordneten Knotens erlaubt. Sobald der Knoten Sn als der dem Teilnehmer Td zugeordnete Knoten erkannt ist, ist in einem nächsten Schritt festzustellen, wie viele Anschlüsse der Knoten insgesamt besitzt. Im vorliegenden Beispiel hat der Knoten Sn drei Anschlüsse, nämlich P1Sn, PaSn und P3Sn. Weiterhin ist die in der Regel vordefinierte Hierachie der Anschlüsse von Knoten Sn festzustellen. Im vorliegenden Fall wird von der folgenden Hierachie ausgegangen: P1Sn<PaSn<P3Sn. In einem weiteren Schritt ist festzustellen, welche der Anschlüsse P1Sn, PaSn und P3Sn des Knotens Sn noch belegt sind. Dies erfolgt beispielsweise durch die Abfrage, welche MAC (Media Access Control) Adressen an welchem der Anschlüsse verfügbar sind. Dazu kann mittels eines Protokolls, wie beispielsweise eines IP (Internet Protokolls) Protokolls eine Abfrage erfolgen, welche IP Adressen welcher erkannten MAC Adresse zugeordnet ist. Im vorliegenden Ausführungsbeispiel wird sich somit feststellen lassen, dass an Anschluss PaSn ein Antrieb 1 als Teilnehmer Td und an Anschluss P3Sn direkt ein weiterer Antrieb 2 als Teilnehmer T2 angeschlossen ist. Die soeben in Bezug auf den Knoten Sn beschriebenen Schritte des erfindungsgemäßen Verfahrens sind in Bezug auf die anderen Knoten des Netzwerkes entsprechend durchzuführen. So weist der Knoten S2 die vier Anschlüsse P1S2,P2S2, P3S2 und P4S2 auf, an denen weitere Teilnehmer des Netzwerkes angeschlossen sind. Über Anschluss P2S2 ist die speicherprogrammierbare Steuerung SPS1 als Teilnehmer T3 und über Anschluss P4S2 ist die Bedienungseinheit als Teilnehmer T4 angeschlossen. Weiterhin wird davon ausgegangen, dass die Anschlüsse des Knotens S2 die Hierachie P1S2<P2S2<P3S2<P4S2 aufweisen. Da die Knoten S2 und Sn direkt miteinander verbunden sind, sind auch die Teilnehmer T3 und T4 indirekt über den Knoten S2 mit dem Knoten Sn verbunden. Entsprechend lassen sich dann wiederum mit Hilfe von IP Protokollen die IP Adressen von Teilnehmer T3 und T4 feststellen. In einem letzten Schritt ist nun die Beziehung der Teilnehmer untereinander festzulegen. Aus der Beziehung P1Sn<PaSn<P3Sn der Anschlüsse des Knotens Sn lässt sich direkt folgern, dass der Teilnehmer T2 der Nachfolger von Teilnehmer Td ist, da T2 an P3Sn und Td an PaSn angeschlossen ist. In der anderen Richtung lässt sich über die gleiche Beziehung feststellen, dass der Knoten S1 der Vorgänger von Teilnehmer Td ist, da S2 an P1Sn und Td an PaSn angeschlossen ist. Da für den Knoten S2 wiederum die Beziehung P1S2<P2S2<P3S2<P4S2 besteht und an P1S2 der Knoten Sn und an P2S2 der Teilnehmer T3 angeschlossen ist, lässt sich somit indirekt der Vorgänger von Teilnehmer Td ermitteln. Da dies für alle Teilnehmer des Netzwerkes entsprechend fortgeführt werden kann, lässt sich somit über die vordefinierte und damit bekannte Hierachie der Anschlüsse der einzelnen Knoten und dem Wissen welche Anschlüsse belegt sind, eine Ordnung aller Teilnehmer des Netzwerkes aufzeigen. Die sich daraus für die in Fig.1 gezeigte Ausführung ergebende Ordnung ist in Fig.2 schematisch dargestellt. Zu beachten ist, dass die Hierachie der Anschlüsse eines Knotens nur eine Richtung vorgibt aber keine direkte Aussage erlaubt, wer Vorgänger bzw. Nachfolger ist. Diese Festlegung ist frei wählbar, solange nur die Beziehung der Anschlüsse aller im Netzwerk befindlichen Knoten die gleiche Ausrichtung aufweisen.

Die vorliegende Erfindung lässt sich beispielsweise dann vorteilhaft einsetzen, wenn es darum geht, in einem Automatisierungsnetzwerk einen defekten Antrieb auszutauschen. Angenommen, Antrieb 1 ist defekt und wird von einem Servicetechniker ausgetauscht, dann muss der neue Antrieb zuerst erkennen, welchem Knoten er zugeordnet ist und welche Teilnehmer seine Nachbarn, wie beispielsweise Vorgänger und Nachfolger sind. Besitzt der Teilnehmer T3 einen Flash Speicher, in dem die gemäß der vorliegenden Erfindung ermittelte Beziehung bzw. Ordnung von Td zu T3 gespeichert wird, kann der Teilnehmer T3 den ausgetauschten Teilnehmer Td mit den entsprechenden gespeicherten,Daten versorgen, sobald der Teilnehmer Td den Teilnehmer TS als Nachbarn erkannt hat. Der ausgetauschte Teilnehmer Td kann dann unmittelbar und ohne größeren Zeitverlust die Aufgaben des alten Antriebs übernehmen. Da dies lokal in einer begrenzten Umgebung innerhalb des Netzwerkes erfolgt, ist keine zeitaufwendige Umprojektionierung oder Rekonstruktion des Netzwerkes durch eine zentrale Einheit erforderlich.

Die soeben in Bezug auf ein Automatisierungssystem beschrieben Ausführungsform kann natürlich auch in ähnlicher oder abgewandelter Form in anderen Netzwerken, wie beispielsweise einem Ethernet mit Computern und Peripheriegeräten als Teilnehmer eingesetzt werden. Wesentlich ist immer die lokale und damit die schnelle Erkennung von Ordnungen von Teilnehmern. So kann es vorteilhaft sein, wenn ein Computer weiß, ob sein unmittelbar direkter Nachbar ein anderer Computer oder auch ein Drucker ist. Andererseits gilt es zu bestimmen in welche Richtung der nächste Teilnehmer einer bestimmten Gruppe sich befindet. So kann es beispielsweise für einen Computer wichtig sein zu wissen in welche Richtung sich der nächste im Netzwerk verfügbare Drucker befindet. Zu beachten ist hier, und auch in der Beschreibung in bezug auf die anderen Ausführungen, dass unter den Begriffen wie "Richtung" und "Umgebung" nicht zwingend eine räumliche Zuordnung der Teilnehmer eines Netzwerkes zu verstehen ist. Vielmehr sollen diese Begriffe eine Orientierung innerhalb der Ordnung des Netzwerkes beschreiben. Die Erkennung einer räumlichen Zuordnung ist nicht Teil des wesentlichen Grundgedankens der vorliegenden Erfindung. Sie kann aber bei der Anwendung der vorliegenden Erfindung eine Rolle spielen, wie nun anhand einer zweiten Ausführung gezeigt wird.

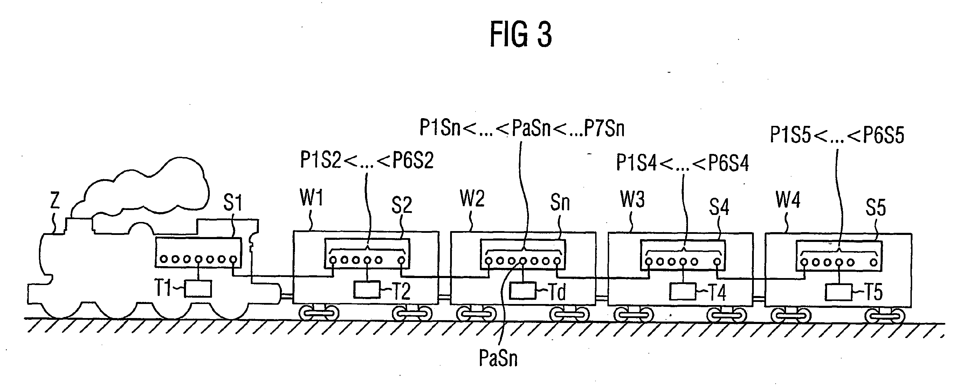

Fig.3 zeigt eine zweite Ausführungsform, wie sie beispielsweise in einem Schienverkehrsmittel eingesetzt werden kann. Das Netzwerk befindet sich hier in einem Schienenverkehrsmittel mit einer Zugmaschine Z und den Waggons W1, W2 W3 und W4. Die Waggons W1 und W4 sind Speisewaggons und gehören damit einer ersten Gruppe von Teilnehmern an. Die Waggons W2 und W3 sind Personenwaggons und gehören einer anderen Gruppe von Teilnehmen an. In der Zugmaschine Z befindet sich der Knoten S1. in jedem der Waggons befindet sich jeweils ein entsprechender Knoten S2, Sn, S4, und S5. Der Knoten S2 in Waggon W1 weist 6 Anschlüsse P1S2-P6S2 mit der Hierachie P1S2<...<P6S2 auf. Der Knoten Sn in Waggon W2 weist 7 Anschlüsse P1Sn-P7Sn mit der Hierachie P1Sn<...<PaSn<...<P7Sn auf. In Waggon W3 befindet sich der Knoten S4 mit den Anschlüssen P1S4-P6S4 und der Hierachie P1S4<...<P6S4. Der Knoten S5 in Waggon W4 weist auch 6 Anschlüsse P1S5-P6S5 mit der Hierachie P1S5<...<P6S5 auf. Die einzelnen Knoten sind entsprechend der Waggonanordnung miteinander in einer Reihe verbunden. Jeweils an einem Anschluss eines Knotens ist ein Computer angeschlossen. So ist an Anschluss PaSn der Computer des Waggons W2 angeschlossen und soll im folgenden als Teilnehmer Td bezeichnet werden. Entsprechend befindet sich ein Teilnehmer T1 in der Zugmaschine Z, ein Teilnehmer T2 in W1, ein Teilnehmer T4 in W3 und ein Teilnehmer T5 in W4. Aufgrund der Anordnung der Anschlüsse und deren Hirachie können nun mittels der vorliegenden Erfindung beispielsweise die Nachbarn von Teilnehmer Td ermittelt werden. Dazu ist zuerst wieder der Knoten Sn zu ermitteln mit dem der Teilnehmer Td verbunden ist. Entsprechend ist die Anzahl der verfügbaren Anschlüsse des Knotens Sn sowie die Hierachie der Anschlüsse zu ermitteln. Danach ist der Anschluss PaSn zu ermitteln mit dem der Teilnehmer Td verbunden ist, sowie die weiteren Anschlüsse, die mit weiteren Knoten oder Anschlüssen verbunden sind. Dasselbe muss für die anderen Knoten S1,S2,S4 und S5 erfolgen. Letztendlich ist dann noch die Beziehung der Teilnehmer T1, T2,Td, T4 und T5 untereinander festzulegen. In der vorliegenden Ausführung ergibt sich, dass sich in die eine Richtung, das heißt Richtung Zugende, der Teilnehmer T4 und dann Teilnehmer T5 befinden. In die andere Richtung, in Richtung Zugmaschine, befinden sich der T2 und dann der T1 in der Zugmaschine selbst. Über die IP Adressen der einzelnen Teilnehmer die dann auch Teilnehmer T2 und Teilnehmer T5 als Speisewaggons W1 und W4 und damit als zu der einen Gruppe von Teilnehmern gehörend identifizieren, kann der Computer als Teilnehmer Td in Waggon W2 den Passagieren Informationen zur Verfügung stellen, in welche Richtung, also hier in Richtung der Zugmaschine sich der nächste Speisewagen befindet. Auch in dieser Anwendung erlaubt die vorliegende Erfindung eine dynamische und damit schnelle Anpassung, hier des Passagierleitsystems, sobald sich die Anordnung der Waggons zum Beispiel bei einer Neuzusammenstellung ändert.

Anhand der beiden aufgezeigten Ausführungsformen ist das Prinzip der vorliegenden Erfindung beschrieben. Die Erfindung ist aber nicht auf diese beiden Ausführungen begrenzt. Vielmehr ist die Erfindung immer dann anwendbar, wenn es darum geht lokal, innerhalb eines Netzwerkes eine Ordnung von Teilnehmern festzulegen und damit schnell auf lokale Veränderungen von Teilnehmern im Netzwerk zu reagieren. Die Anwendung des erfindungsgemäßen Verfahrens und der Vorrichtung ist auch unabhängig von der Struktur des Netzwerkes, sei es nun ein eindimensionales Netzwerk, wie im Falle des Schienenverkehrsmittels, oder auch ein mehrdimensionales Netzwerk, wie beispielsweise im beschriebenen Automatisierungsnetzwerk. So kann es in manchen Fällen wichtig sein, die direkten Nachbarteilnehmer eines Teilnehmers festzustellen. In anderen Anwendungen ist es wichtig, den nächsten Teilnehmer einer bestimmten Gruppe von Teilnehmern festzustellen. Die vorliegende Erfindung erlaubt, dass durch die lokale Verfügbarkeit des Wissens einer Ordnung von Teilnehmern innerhalb eines Netzwerkes, dynamisch auf Änderungen des Netzwerkes reagiert werden kann.

## Patentansprüche

1. Verfahren zur Erkennung einer Ordnung von Teilnehmern (T1, T2, Td, ...) eines Netzwerkes, wobei das Netzwerk eine Vielzahl von Knoten (S1, S2, Sn, ...) beinhaltet und jeder der Knoten (S) eine Anzahl von Anschlüssen (P1S, P2S, PaS, ..) aufweist, mittels derer die Knoten (S1, S2, Sn, ...) und die Teilnehmer (T1, T2, Sd, ...) untereinander verbindbar sind, mit den Schritten:
a) Erkennen des mit einem der Teilnehmer (Td) verbundenen Knotens (Sn),
b) Feststellen der Anzahl der Anschlüsse dieses Knotens (Sn) und einer vordefinierten Hierarchie der Anschlüsse,
wobei die vordefinierte Hierarchie die Reihenfolge der Anschlüsse betrifft,
c) Ermitteln für diesen Knoten (Sn), den Anschluss (PaSn) mit dem der Teilnehmer (Td) mit diesem Knoten (Sn) verbunden ist,
d) Ermitteln für diesen Knoten (Sn), weitere Anschlüsse die mit weiteren Knoten (S1, S2, ..) oder Teilnehmern (T1, T2, ..) verbunden sind,
e) Festlegen einer Beziehung zwischen Teilnehmern (T1, T2, Td, ...) des Netzwerkes, anhand der für den Knoten (Sn) vordefinierten Hierarchie der Anschlüsse und der ermittelten Anschlüsse die mit Teilnehmern (T1, T2, Td,...) oder weiteren Knoten (S1, S2, ...) verbunden sind, wobei die festgelegte Beziehung in den Teilnehmern oder Knoten gespeichert wird.

2. Verfahren nach Anspruch 1,
**dadurch gekennzeichnet,**
**dass** die Schritte a) - e) von jedem der Teilnehmer (Td) ausgeführt wird.

3. Verfahren nach einem der Ansprüche 1 oder 2,
**dadurch gekennzeichnet,**
**dass** mit Schritt e) für jeden der Teilnehmer (Td) ein weiterer Teilnehmer als Vorgänger und ein weiterer Teilnehmer als Nachfolger im Netzwerk festgelegt wird.

4. Verfahren nach einem der Ansprüchen 1-3,
**dadurch gekennzeichnet,**
**dass** alle Schritte des verfahrens ganz oder teilweise in periodischen Abständen wiederholt werden.

5. Verfahren nach einem der Ansprüche 1-4,
**dadurch gekennzeichnet,**
**dass** die Schritte a)-e)des Verfahrens wiederholt werden, wenn ein Teilnehmer nicht mehr mit dem Netzwerk verbunden ist.

6. Verfahren nach einem der Ansprüche 1-4,
**dadurch gekennzeichnet,**
**dass** die Schritte a)-e) des Verfahrens wiederholt werden wenn ein neuer Teilnehmer mit den Netzwerk verbunden wird.

7. Verfahren nach einem der Ansprüche 1-4,
**dadurch gekennzeichnet,**
**dass** die Schritte a)-e) des Verfahrens wiederholt werden wenn ein Teilnehmer durch einen neuen Teilnehmer ersetzt wird.

8. Verfahren nach einem der vorherigen Ansprüche,
**dadurch gekennzeichnet,**
**dass** ein Teilnehmer der einen anderen Teilnehmer des Netzwerkkes ersetzt, die Schritte a -d) ausführt und die gespeicherte Beziehung bei seinem Nachbarn abfragt.

9. verfahren nach einem der vorherigen Ansprüche,
**dadurch gekennzeichnet,**
**dass** die Schritte a) und c) mittels eines Discovery Protokolls durchgerührt werden.

10. Verfahren nach einem der vorherigen Ansprüche,
**dadurch gekennzeichnet,**
**dass** Schritt d) mittels der MAC Adressen durchgeführt wird.

11. Verfahren nach einem der vorherigen Ansprüche,
**dadurch gekennzeichnet,**
**dass** die in Schritt e) ermittelte Beziehung auch die IP Adressen der anderen Teilnehmer beinhaltet.

12. Vorrichtung zur Erkennung einer Ordnung von Teilnehmern (T1, T2, Td, ..) eines Netzwerkes, mit einer Vielzahl von Knoten (S1, S2, Sn, ...), wobei jeder der Knoten (S) eine Anzahl (MS) von Anschlüssen (P1S, P2S, PaS, ..., PMS) mit einer vordefinierten Hierarchie aufweist und wobei die Knoten (S1, S2, Sn, ...) und die Teilnehmer (T1, T2, Sd, ...) mittels der Anschlüsse untereinander verbindbar sind, mit
- Mitteln zum Erkennen des mit einem der Teilnehmer (Td) verbundenen Knotens (Sn),
- Mitteln zum Feststellen der Anzahl der Anschlüsse dieses Knotens (Sn) und einer vordefinierten Hierarchie der Anschlüsse,
- Mitteln zum Ermitteln des Anschlusses (PaSn) des Knotens (Sn) mit dem der Teilnehmer (Td) mit dem Knoten (Sn) verbunden ist,
- Mitteln zum Ermitteln von weiteren Anschlüssen (PavSn, PanSn) des Knotens (Sn) die mit weiteren Knoten (S1, S2, ...) oder Teilnehmern (T1, T2, ...) verbunden sind,
- Mittel zum Festlegen einer Beziehung zwischen Teilnehmern (T1, T2, Td, ...) des Netzwerkes, anhand der für den Knoten (Sn) vordefinierten Hierarchie der Anschlüsse und der ermittelten Anschlüsse (PaSn,PavSn,PanSn) die mit Teilnehmern (T1, T2, Td, ...) oder weiteren Knoten (S1, S2, ...) verbunden sind, wobei die Mittel zum Festlegen der Beziehung in den Teilnehmern oder Knoten gespeichert sind,
**dadurch gekennzeichnet,**
**dass** die vordefinierte Hierarchie die Reihenfolge der Anschlüsse betrifft.

13. Vorrichtung nach Anspruch 12,
**gekennzeichnet durch** Mittel zum Speichern der festgelegten Hierarchie.

14. Netzwerk mit einer Vielzahl von Knoten und Teilnehmern, und zumindest einer Vorrichtung nach einem der Ansprüche 12 oder 13.

15. Netzwerk nach Anspruch 14,
**dadurch gekennzeichnet,**
**dass** die Vorrichtung nach Anspruch 12 oder 13 in jedem der Teilnehmer vorhanden ist.

16. Netzwerk nach Anspruch 13 oder 14, wobei das Netzwerk ein Automatisierungssystem ist und als Teilnehmer Steuerungen, Bedienungseinheiten, Antriebe oder Aktoren beinhaltet.

17. Netzwerk nach Anspruch 13 oder 14, wobei das Netzwerk ein Ethernet ist und als Teilnehmer Personal Computer oder Peripheriegeräten beinhaltet.

18. Netzwerk nach Anspruch 13 oder 14, wobei das Netzwerk ein Schienentransportmittel ist und als Teilnehmer Zugmaschinen und Waggons beinhaltet.

19. Computerprogrammprodukt zur Ausführung der Schritte nach einem der Verfahren der Ansprüche 1-11.

## Claims

1. Method for identifying a rank for subscribers (T1, T2, Td, ...) in a network, wherein the network contains a multiplicity of nodes (S1, S2, Sn, ...) and each of the nodes (S) has a number of connections (P1S, P2S, PaS, ...) which can be used to connect the nodes (S1, S2, Sn, ...) and the subscribers (T1, T2, Sd, ...) to one another, having the following steps:
a) the node (Sn) connected to one of the subscribers (Td) is identified,
b) the number of connections on said node (Sn) and a predefined hierarchy for the connections are established,
wherein the predefined hierarchy relates to the order of the connections,
c) the connection (PaSn) by means of which the subscriber (Td) is connected to said node (Sn) is ascertained for said node (Sn),
d) further connections which are connected to further nodes (S1, S2, ...) or subscribers (T1, T2, ...) are ascertained for said node (Sn),
e) a relationship between subscribers (T1, T2, Td, ...) in a network is stipulated using the hierarchy of the connections and of the ascertained connections which are connected to subscribers (T1, T2, Td, ...) or further nodes (S1, S2, ...), which hierarchy is predefined for the node (Sn), wherein the stipulated relationship is stored in the subscribers or nodes.

2. Method according to Claim 1,
**characterized**
**in that** steps a) - e) are performed by each of the subscribers (Td).

3. Method according to one of Claims 1 and 2,
**characterized**
**in that** step e) involves a further subscriber being stipulated as predecessor and a further subscriber being stipulated as successor in the network for each of the subscribers (Td).

4. Method according to one of Claims 1-3,
**characterized**
**in that** all the steps of the method are repeated wholly or in part at periodic intervals.

5. Method according to one of Claims 1-4,
**characterized**
**in that** steps a) - e) of the method are repeated when a subscriber is no longer connected to the network.

6. Method according to one of Claims 1-4,
**characterized**
**in that** steps a) - e) of the method are repeated when a new subscriber is connected to the network.

7. Method according to one of Claims 1-4,
**characterized**
**in that** steps a) - e) of the method are repeated when a subscriber is replaced by a new subscriber.

8. Method according to one of the preceding claims,
**characterized**
**in that** a subscriber which replaces another subscriber in the network performs steps a) - d) and requests the stored relationship from its neighbours.

9. Method according to one of the preceding claims,
**characterized**
**in that** steps a) and c) are performed using a discovery protocol.

10. Method according to one of the preceding claims,
**characterized**
**in that** step d) is performed using the MAC addresses.

11. Method according to one of the preceding claims,
**characterized**
**in that** the relationship ascertained in step e) also contains the IP addresses of the other subscribers.

12. Apparatus for identifying a rank for subscribers (T1, T2, Td, ...) in a network, having a multiplicity of nodes (S1, S2, Sn, ...), wherein each of the nodes (S) has a number (MS) of connections (P1S, P2S, PaS, ..., PMS) with a predefined hierarchy and wherein the nodes (S1, S2, Sn, ...) and the subscribers (T1, T2, Sd, ...) can be connected to one another by means of the connections, having
- means for identifying the nodes (Sn) connected to one of the subscribers (Td),
- means for establishing the number of connections of said node (Sn) and a predefined hierarchy for the connections,
- means for ascertaining the connection (PaSn) on the node (Sn) by means of which the subscriber (Td) is connected to the node (Sn),
- means for ascertaining further connections (PavSn, PanSn) on the node (Sn) which are connected to further nodes (S1, S2, ...) or subscribers (T1, T2, ...),
- means for stipulating a relationship between subscribers (T1, T2, Td, ...) in the network using the hierarchy of the connections and of the ascertained connections (PaSn, PavSn, PanSn) which are connected to subscribers (T1, T2, Td, ...) or further nodes (S1, S2, ...), which hierarchy is predefined for the node (Sn), wherein the means for stipulating the relationship are stored in the subscribers or nodes,
**characterized**
**in that** the predefined hierarchy relates to the order of the connections.

13. Apparatus according to Claim 12,
**characterized by** means for storing the stipulated hierarchy.

14. Network having a multiplicity of nodes and subscribers, and having at least one apparatus according to one of Claims 12 and 13.

15. Network according to Claim 14,
**characterized**
**in that** the apparatus according to Claims 12 or 13 is present in each of the subscribers.

16. Network according to Claim 13 or 14, wherein the network is an automation system and contains controllers, operator control units, drives or actuators as subscribers.

17. Network according to Claims 13 or 14, wherein the network is an Ethernet and contains personal computers or peripheral devices as subscribers.

18. Network according to Claim 13 or 14, wherein the network is a rail transportation means and contains traction units and wagons as subscribers.

19. Computer program product for performing the steps according to one of the methods in Claims 1-11.

## Revendications

1. Procédé d'identification d'un ordre de participant (T1, T2, Td, ...) à un réseau, le réseau comportant une pluralité de noeuds (S1, S2, SN, ...) et chacun des noeuds (S) ayant un certain nombre de bornes (P1S, P2S, PaS, ...) aux moyens desquelles les noeuds (S1, S2, Sn, ...) et les participants (T1, T2, Td, ...) peuvent être reliés entre eux comprenant les stades dans desquels :
a)On identifie le noeud (Sn) relié à l'un des participants (Td);
b) On constate le nombre des bornes de ce noeud (Sn) et on fixe une hiérarchie définie à l'avance des bornes,
la hiérarchie définie à l'avance concernant la succession des bornes,
c) On détermine, pour ce noeud (Sn), la borne (PaSn) par laquelle le participant (Td) est relié à ce noeud (Sn),
d) On détermine, pour ce noeud (Sn), d'autres bornes qui sont reliées à d'autres noeuds (S1, S2, ...) ou participants (T1, T2, ...),
e) On fixe une relation entre des participants (T1, T2, td, ...) du réseau, au moyen de la hiérarchie des bornes définie pour le noeud (Sn) et des bornes déterminées qui sont reliées à des participants (T1, T2, ...) ou à d'autres noeuds (S1, S2, ...), la relation fixée étant mémorisée dans les participants ou dans les noeuds.

2. Procédé suivant la revendication 1,
**caractérisé,**
**en ce que** les stades a) à e) sont effectués par chacun des participants (Td).

3. Procédé suivant l'une des revendications 1 ou 2,
**caractérisé,**
**en ce que** par le stade e) on fixe pour chacun des participants (Td) un autre participant comme prédécesseur ou un autre participant comme successeur dans le réseau.

4. Procédé suivant l'une des revendications 1 à 3,
**caractérisé,**
**en ce que** l'on répète tous les stades du procédé en tout ou partie à des intervalles périodiques.

5. Procédé suivant l'une des revendications 1 à 4,
**caractérisé,**
**en ce que** l'on répète les stades a) à e) du procédé si un participant n'est plus relié au réseau.

6. Procédé suivant l'une des revendications 1 à 4,
**caractérisé**
**en ce que** l'on répète les stades a) à e) du procédé si un participant nouveau est relié au réseau.

7. Procédé suivant l'une des revendications 1 à 4,
**caractérisé,**
**en ce que** l'on répète les stades a) à e) du procédé si un participant est remplacé par un participant nouveau.

8. Procédé suivant l'une des revendications précédentes,
**caractérisé,**
**en ce qu'**un participant, qui remplace l'autre participant du réseau, effectue les stades a) à d) et demande à ses voisins la relation mise en mémoire.

9. Procédé suivant l'une des revendications précédentes,
**caractérisé,**
**en ce que** l'on effectue le stade a) et c) au moyen d'un protocole discovery.

10. Procédé suivant l'une des revendications précédentes,
**caractérisé,**
**en ce que** l'on effectue le stade d) au moyen des adresses MAC.

11. Procédé suivant l'une des revendications précédentes,
**caractérisé,**
**en ce que** la relation déterminée au stade e) contient aussi les adresses IP des autres participants.

12. Dispositif d'identification d'un ordre de participants (T1, T2, Td, ...) à un réseau, comprenant une pluralité de noeuds (S1, S2, Sn, ...), chacun des noeuds ayant un certain nombre (S) de bornes (P1S, P2S, PaS, ..., PMS) suivant une hiérarchie définie à l'avance et les noeuds (S1, S2, Sn, ...) et les participants (T1, T2, Sd, ...) pouvant être reliés entre eux au moyen de bornes, comprenant :
- des moyens pour identifier le noeud (Sn) relié à l'un des participants (Td),
- des moyens pour constater le nombre des bornes (Sn) et pour fixer une hiérarchie définie à l'avance des bornes,
- des moyens pour déterminer la borne (PaSn)du noeud (Sn) par laquelle le participant (Td) est relié au noeud (Sn),
- des moyens pour déterminer d'autres bornes (PavSn, PanSn) du noeud (Sn), qui sont reliées à d'autres noeuds (T1, T2, ...) ou participants (T1, T2, ...),
- des moyens pour fixer une relation entre des participants (T1, T2, Td, ...) au réseau, au moyen de la hiérarchie des bornes définie à l'avance pour le noeud (Sn), et des bornes (PaSn, PavSn, PanSn) déterminées qui sont reliées à des participants (T1, T2, Td, ...) ou à d'autres noeuds (S1, S2, ...), les moyens de fixation de la relation étant mis en mémoire dans les participants ou les noeuds,
**caractérisé,**
**en ce que** la hiérarchie définie à l'avance concerne la succession des bornes.

13. Dispositif suivant la revendication 12,
**caractérisé par** des moyens de mémorisation de la hiérarchie fixée.

14. Réseau ayant une pluralité de noeuds et de participants et au moins un dispositif suivant l'une des revendications 12 ou 13.

15. Réseau suivant la revendication 14,
**caractérisé en ce que** le dispositif suivant la revendication 12 ou 13 est présent dans chacun des participants.

16. Réseau suivant la revendication 13 ou 14, dans lequel le réseau est un système d'automatisation et contient comme participant, des commandes, des unités de services, des entraînements ou des actionneurs.

17. Réseau suivant la revendication 13 ou 14, dans lequel le réseau est un éthernet et contient comme participants des ordinateurs personnels ou des appareils périphériques.

18. Réseau suivant la revendication 13 ou 14, dans lequel le réseau est un moyen de transport ferroviaire et contient comme participants des machines de traction et des wagons.

19. Produit de programmes informatiques pour la réalisation des stades suivant l'une des procédés des revendications 1 à 11.
